# EUROPÄISCHE PATENTSCHRIFT

(11) **EP 2 225 817 B1**
(45) Veröffentlichungstag und Bekanntmachung des Hinweises auf die Patenterteilung: **13.04.2011**
(21) Anmeldenummer: 08804905.1
(22) Anmeldetag: 30.09.2008
(51) Int. Cl.: H02K 5/167, F16C 23/04

(54) **ELEKTRISCHER ANTRIEBSMOTOR, INSBESONDERE FÜR EIN AGGREGAT IN EINEM KRAFTFAHRZEUG**
ELECTRIC DRIVE MOTOR, IN PARTICULAR FOR A UNIT IN A VEHICLE
MOTEUR D'ENTRAÎNEMENT ÉLECTRIQUE, EN PARTICULIER POUR UN ÉQUIPEMENT DANS UN VÉHICULE AUTOMOBILE

(30) Priorität: 30.11.2007 DE 102007057706
(43) Veröffentlichungstag der Anmeldung: 08.09.2010
(73) Patentinhaber: Robert Bosch GmbH, 70442 Stuttgart (DE)
(72) Erfinder: KELLER, Hanspeter, 76199 Karslruhe (DE); TASCH, Franz, 76287 Rheinstetten (DE); WEHRLE, Andreas, 77770 Durbach (DE); SCHROEDER, Patrick, 77815 Buehl (DE)
(86) Internationale Anmeldenummer: PCT/EP2008/063061
(87) Internationale Veröffentlichungsnummer: WO 2009/068348

(56) Entgegenhaltungen:
- DE-A1- 2 416 878
- DE-A1- 10 006 350
- FR-A- 2 639 161
- US-B1- 6 183 136
- ANONYMOUS: "Self-centering snap-in spherical bearing" RESEARCH DISCLOSURE, MASON PUBLICATIONS, HAMPSHIRE, GB, Bd. 344, Nr. 25, 1. Dezember 1992 (1992-12-01), XP007118424 ISSN: 0374-4353

## Beschreibung

Die Erfindung bezieht sich auf einen elektrischen Antriebsmotor, insbesondere für ein Aggregat in einem Kraftfahrzeug, nach dem Oberbegriff des Anspruches 1.

### Stand der Technik

In der DE 100 06 350 A1 wird ein elektrischer Fensterheber-Antriebsmotor für ein Kraftfahrzeug beschrieben, der als Kommutatormotor mit einem drehfest mit der Rotorwelle umlaufenden Kommutator und darauf aufliegenden Kohlebürsten umfasst, die in einem Bürstenhalter aufgenommen sind. Der Bürstenhalter ist außerdem Träger eines Lagers für die Rotorwelle, das als Kalottenlager mit einer kalottenförmigen Lagerbuchse und einer im Bürstenhalter ausgebildeten Lageraufnahme ausgebildet ist. Die Rotorwelle ist mit Lagerspiel in der Lagerbuchse geführt, die auf Grund der Kalottenform bezogen auf ihre axiale Ausrichtung kleine Ausgleichswinkel ausführen kann.

Die Lageraufnahme besteht aus sich in Achsrichtung erstreckenden Haltearmen, welche mit dem Bürstenhalter verbunden sind und im Bereich ihrer Stirnseite auf der Mantelfläche der Lagerbuchse anliegen. Die Lagerbuchse wird außerdem von einem zusätzlichen Lagerring eingefasst, der stirnseitig die Haltearme übergreift und damit ein radiales Ausweichen der Haltearme verhindert.

Bei der Aufnahme der Lagerbuchse in der Lageraufnahme ist darauf zu achten, dass lokal in die Haltearme eingeleitete und in Radialrichtung verlaufende Kraftspitzen vermieden werden. Zugleich muss die Lagerbuchse verdrehsicher in der Lageraufnahme gehalten werden.

Mit der XP7118424 ist eine Lageranordnung bekannt geworden, bei der in einer Lagerplatte eine sphärische Lageraufnahme für ein sphärisches Lager ausgeformt ist, wobei an der Lagerplatte federnde Haltefinger angeformt sind, die in entsprechende Aussparungen des sphärischen Lagers eingreifen.

### Offenbarung der Erfindung

Der Erfindung liegt die Aufgabe zugrunde, eine konstruktiv einfach aufgebaute und stabile Lagerung für die Rotorwelle eines elektrischen Antriebsmotors anzugeben.

Diese Aufgabe wird erfindungsgemäß mit den Merkmalen des Anspruches 1 gelöst. Die Unteransprüche geben zweckmäßige Weiterbildungen an.

Der erfindungsgemäße elektrische Antriebsmotor, der insbesondere als Antrieb für ein Aggregat in einem Kraftfahrzeug wie beispielsweise eine Fensterhebereinrichtung vorgesehen ist, weist eine in einem Kalottenlager drehbar gelagerte Rotorwelle auf, wobei das Kalottenlager eine kalottenförmige Lagerbuchse und eine zugehörige Lageraufnahme umfasst, welche die Lagerbuchse zumindest teilweise umschließt und in Umfangsrichtung formschlüssig sichert. Hierfür weist die Lageraufnahme zumindest drei axiale Spannfinger auf, zwischen denen die Lagerbuchse aufgenommen ist, wobei an der äußeren Mantelfläche der Mantelbuchse den Spannfingern zugeordnete Kontaktsektoren vorgesehen sind, welche im Schnitt quer zur Längsachse gesehen rund ausgeführt sind. Diese Kontaktsektoren liegen an der Innenseite der jeweiligen Spannfinger an. Des Weiteren ist an der Lagerbuchse im zwischenliegenden Bereich zwischen den Kontaktsektoren mindestens ein radial nach außen überstehender

Verdrehsicherungsvorsprung angeordnet, der in den Zwischenraum zwischen zwei benachbarten Spannfingern radial einragt. An die Kontaktfläche, welche sich in Achsrichtung gesehen in der Mitte der Lagerbuchse befindet, schließt sich axial in beide Richtungen jeweils ein Kontaktabschnitt an, der sphärisch bzw. teilkugelförmig ausgebildet ist Bei dieser komplementären Ausführung der Innenfläche der Spannfinger ist somit über die gesamte axiale Erstreckung der Lagerbuchse ein flächiger Kontakt gegeben, wobei die Teilkugelform ein Kippen der Lagerbuchse gegenüber der Lagerlängsachse erleichtert.

Mit dieser Ausführung des Kalottenlagers werden verschiedene Formteile erzielt. Zum einen wird der in Umfangsrichtung wirksame Formschluss von dem Kontaktbereich zwischen Lagerbuchse und Spannfingern räumlich getrennt, so dass zum einen der Kontaktbereich und die Verdrehsicherung jeweils in optimaler Weise an ihre Funktionen angepasst werden können und zum andern eine gleichmäßigere Kraftübertragung in Radialrichtung und auch in Umfangsrichtung erreicht werden kann. Zur Realisierung des Formschlusses in Umfangsrichtung genügt es, die Verdrehsicherungsvorsprünge an der Lagerbuchse vorzusehen, die sich radial über die Mantelfläche der Buchse erheben und in die Zwischenräume zwischen benachbarten Spannfingern einragen. Diese Spannfinger müssen prinzipiell nicht in besonderer Weise für die Verdrehsicherung hergerichtet werden; grundsätzlich genügt es, dass die Verdrehsicherungsvorsprünge an den Lagerbuchsen in Umfangsrichtung an den Spannfingern anliegen, die blockierende Absätze für die Verdrehsicherungsvorsprünge bilden, so dass eine Verdrehung der Lagerbuchse in der Lageraufnahme verhindert wird.

Da die Kontaktflächen im Bereich der Kontaktsektoren frei von Verdrehsicherungseinrichtungen sind, kann an dieser Stelle ein vorzugsweise flächiger Kontakt zwischen dem Außenmantel der Kontaktsektoren und der Innenfläche an den Spannfingern hergestellt werden, so dass in Radialrichtung eine vergleichmäßigte Flächenpressung im Kalottenlager erreicht und lokale Kraftspitzen vermieden werden. Die Spannfinger verschieben sich daher weniger aus ihrer radialen Sollposition, so dass die Lagerbuchse auch bei auf die Rotorwelle wirkenden Querkräften in ihrer Sollposition verbleibt oder zumindest nur geringfügig radial ausgelenkt wird. Dies ermöglicht es auch, die Spannfinger im Vergleich zu Ausführungen aus dem Stand der Technik weniger stabil auszuführen, ohne dass dies mit einer Änderung der Lagersicherheit einhergeht.

In einer zweckmäßigen Weiterbildung weisen die Kontaktsektoren eine gleichmäßige Mantelfläche auf, wobei der Innenmantel der Spannfinger zweckmäßigerweise komplementär zum Außenmantel der Kontaktsektoren ausgebildet ist, so dass eine gleichmäßige Flächenpressung in Radialrichtung gewährleistet ist. Grundsätzlich wird dies aber auch bei komplementärer Ausführung und nicht gleichmäßiger bzw. nichtebener Ausbildung des Außenmantels des Kontaktsektors und entsprechend des Innenmantels des zugeordneten Spannfingers erreicht, wenngleich die ebene bzw. gleichmäßige Ausbildung einfacher herzustellen ist und im Übrigen auch zumindest kleine Kippwinkel zulässt, unter denen sich die Lagerbuchse gegenüber der Lageraufnahme zum Ausgleich von Wellendurchbiegungen verdrehen kann.

In vorteilhafter Ausführung weist der Kontaktsektor bezogen auf eine Schnittebene senkrecht zu seiner Längsachse einen runden Querschnitt auf, so dass die Einhüllende sämtlicher Kontaktsektoren Zylinderform besitzt. Entlang dieses runden Querschnittes besteht der Kontakt zwischen den Kontaktsektoren und der Innenfläche an den Spannfingern. Grundsätzlich ist es aber auch möglich, sphärische bzw. teilkugelförmige Kontaktflächen an den Kontaktsektoren vorzusehen; auch in diesem Fall besitzen die Kontaktsektoren einen runden Querschnitt. Darüber hinaus sind aber auch nicht-runde Querschnittsformen möglich.

Gemäß einer weiteren zweckmäßigen Ausführung weist der Verdrehsicherungsvorsprung, welcher an der Lagerbuchse radial übersteht, eine abgerundete Außenfläche auf, die entweder als zylindrischer Streifen oder teilkugelförmig ausgebildet ist. Zu den Stirnseiten der Lagerbuchse hin kann sich axial an die abgerundete Außenfläche jeweils eine Toleranzabflachung anschließen, die gegenüber der Ebene an der Stirnseite der Lagerbuchse um einen Winkel geneigt ist, der beispielsweise 30° beträgt. Des Weiteren kann zwischen den Kontaktsektoren und den Verdrehsicherungsvorsprüngen ein Übergangsausgleichsabschnitt angeordnet sein, der bezogen auf die Längsachse der Lagerbuchse um einen Winkel geneigt ist, der beispielsweise nicht mehr als 30° beträgt. Diese beiden Abflachungen erleichtern ein Kippen der Lagerbuchse in zwei zueinander senkrechten Ebenen.

Die Lageraufnahme ist zweckmäßigerweise an einem gehäuseseitigen Bürstenhalter ausgebildet, der auch Träger der Kommutator- bzw. Kohlebürsten ist, welche auf einem drehfest mit der Rotorwelle umlaufenden Kommutator aufliegen. Derartige Kommutatormotoren sind bevorzugt als Gleichstrommotoren ausgebildet und werden als Antrieb für Hilfsaggregate in Kraftfahrzeugen eingesetzt. Die Stromübertragung auf die Ankerwicklung erfolgt über den Kontakt der Kommutator- bzw. Kohlebürsten mit der Mantelfläche des Kommutators. Die Bürstenhalterung ist zugleich Träger der Spannfinger, welche die Lageraufnahme für die kalottenförmige Lagerbuchse bilden, wobei die Spannfinger vorteilhaftweise einteilig mit der Bürstenhalterung ausgebildet sind. Zweckmäßigerweise sind insgesamt vier axiale Spannfinger an der Lageraufnahme vorgesehen, die die Lagerbuchse radial umschließen. Jeweils zwei Spannfingern ist ein gemeinsamer Kontaktsektor zugeordnet, so dass an der Lagerbuchse insgesamt zwei Kontaktsektoren und zwei zwischenliegende Verdrehsicherungsvorsprünge vorgesehen sind. In alternativer Ausführung ist es aber auch denkbar, lediglich drei Spannfinger oder mehr als vier Spannfinger vorzusehen, außerdem kann auch jedem Spannfinger genau ein Kontaktsektor zugeordnet sein, so dass die Anzahl der Kontaktsektoren mit der Anzahl der Spannfinger übereinstimmt.

Weitere Vorteile und zweckmäßige Ausführungen sind den weiteren Ansprüchen, der Figurenbeschreibung und den Zeichnungen zu entnehmen. Es zeigen:
- Fig. 1: einen Längsschnitt durch einen elektrischen Antriebsmotor für eine Fensterhebeeinrichtung in einem Kraftfahrzeug, wobei die Rotorwelle des elektrischen Antriebsmotors in einem Kalottenlager drehbar aufgenommen ist, das eine Lageraufnahme mit axialen Spannfingern umfasst, welche Bestandteil eines Bürstenhalters sind,
- Fig. 2: eine perspektivische Ansicht des Bürstenhalters einschließlich der sich in Achsrichtung erstreckenden Spannfinger und darin aufgenommener kalottenförmiger Lagerbuchse, in der die Rotorwelle drehbar gelagert ist,
- Fig. 3: einen Ausschnitt aus der Lageraufnahme mit zwei Spannfingern,
- Fig. 4: eine perspektivische Darstellung der kalottenförmigen Lagerbuchse,
- Fig. 5: die Lagerbuchse in Draufsicht,
- Fig. 6: einen Schnitt gemäß Schnittlinie VI-VI aus Fig. 5,
- Fig. 7: eine erste Seitenansicht der Lagerbuchse,
- Fig. 8: eine zweite Seitenansicht der Lagerbuchse,
- Fig. 9: eine weitere perspektivische Darstellung der Lagerbuchse.

In den Figuren sind gleiche Bauteile mit gleichen Bezugszeichen versehen.

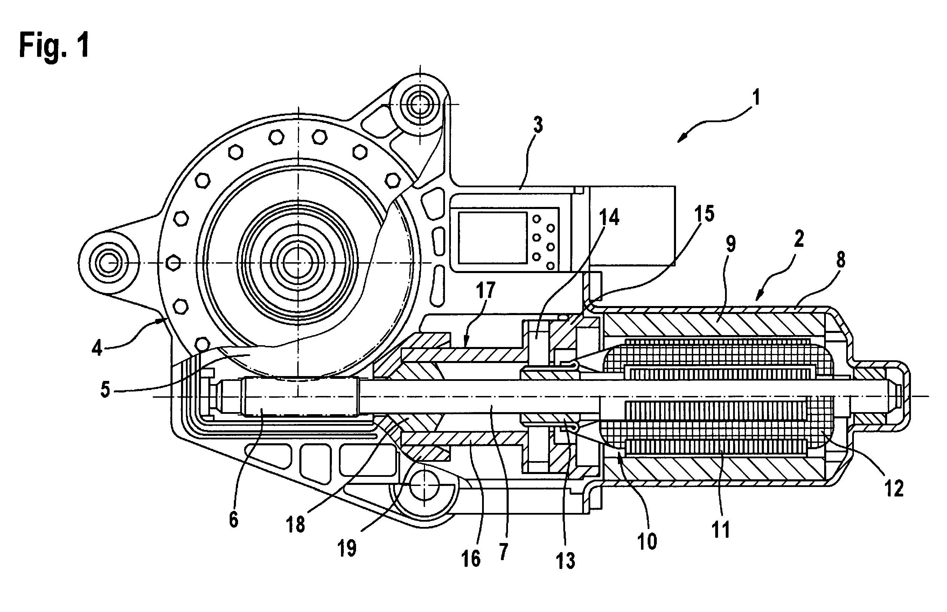

Die in Fig. 1 dargestellte Antriebseinheit 1 dient zum Antrieb eines Hilfsaggregats in einem Kraftfahrzeug wie beispielsweise einer Fensterhebereinrichtung. Die Antriebseinheit 1 umfasst einen als Gleichstrom-Kommutatormotor ausgebildeten Elektromotor 2 sowie in einem Gehäuse 3 ein Getriebe 4, das vom Elektromotor 2 angetrieben wird. Im Getriebe 4 befindet sich ein Schneckenrad 5, das mit einer Schnecke 6 auf der Rotorwelle 7 des Elektromotors kämmt.

Der Elektromotor 2 umfasst einen Stator 9, der in einem Polgehäuse 8 angeordnet ist, sowie einen Rotor 10, der im Stator 9 drehbar gelagert ist. Der Rotor 10 besteht aus einem lamellierten Rotorkörper 11 und einer Ankerwicklung 12, die über einen Kommutator 13, welcher drehfest auf der Rotorwelle 7 aufsitzt, mit Strom versorgt wird. Hierfür liegen an der Mantelfläche des Kommutators 13 Kohlebürsten 14 an, die in einem gehäuseseitigen Bürstenhalter 15 gehalten sind.

Einteilig mit dem Bürstenhalter 15 sind sich axial erstreckende Spannfinger 16 ausgebildet, die sich in Richtung der Schnecke 6 auf der Rotorwelle 7 erstrecken. Insgesamt sind zumindest drei Spannfinger gleichmäßig über den Umfang verteilt angeordnet, insbesondere aber vier derartige Spannfinger. Der Bürstenhalter 15 und die Spannfinger 16 bilden ein gemeinsames, einstückiges Bauteil, das vorteilhafterweise aus Kunststoff gefertigt ist.

Die Spannfinger 16 bilden eine Lageraufnahme eines Kalottenlagers und nehmen eine kalottenförmige Lagerbuchse 18 auf, wobei das Kalottenlager als Lagerstelle für die Rotorwelle 7 vorgesehen und die Rotorwelle in der Lagerbuchse 18 drehbar aufgenommen ist. Die Lagerbuchse 18 wird in Umfangsrichtung verdrehsicher von den Spannfingern 16 gehalten. Teil des Kalottenlagers ist außerdem ein Klemmring 19, welcher die Lagerbuchse 18 axial sichert und die Spannfinger 16 stirnseitig übergreift, wobei ein Teil des Klemmrings 19 sich auf der Außenseite der Spannfinger befindet und diese damit auch radial nach außen begrenzt.

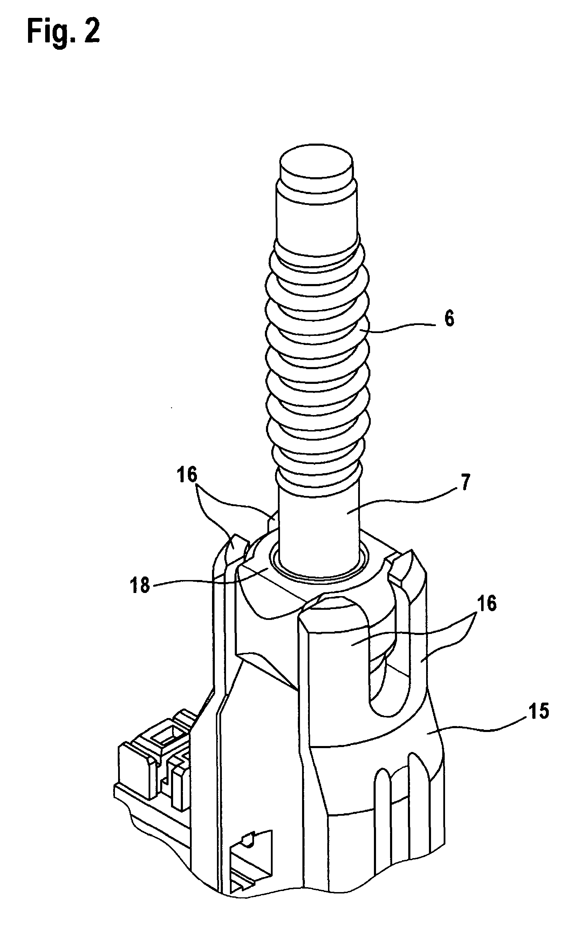

In Fig. 2 ist der Bürstenhalter 15 einschließlich des Kalottenlagers für die Rotorwelle 7 perspektivisch dargestellt. Zu erkennen sind die sich axial vom Grundkörper des Bürstenhalters 15 erstreckenden vier Spannfinger 16, die die Lageraufnahme des Kalottenlagers bilden und zwischen denen die Lagerbuchse 18 aufgenommen ist. Jeweils zwei Spannfinger 16 sind an einer gemeinsamen Basis gehalten, die Teil des Bürstenhalters ist.

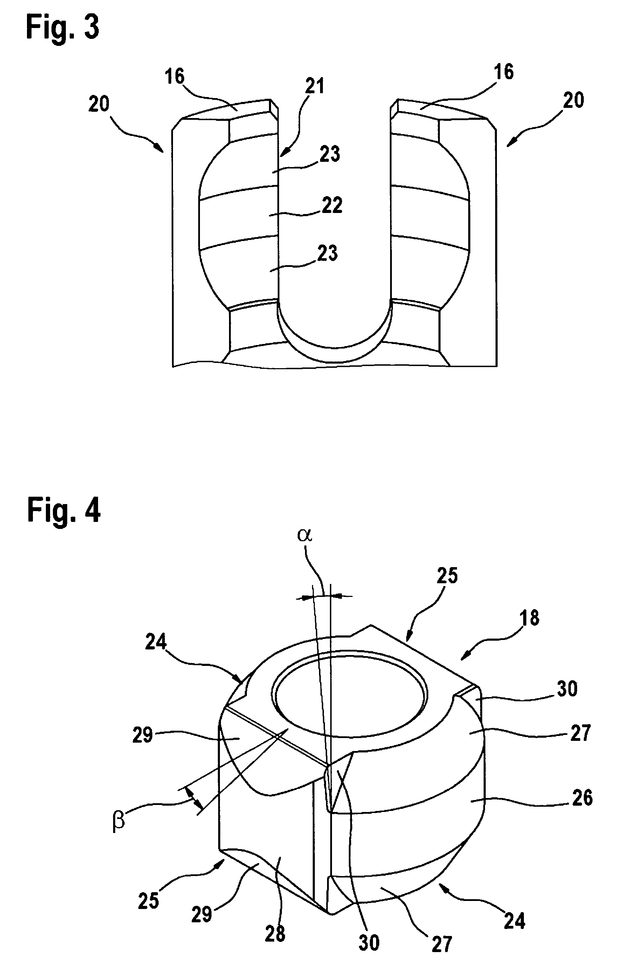

In Fig. 3 ist die Innenseite von zwei Spannfingern 16 der Lageraufnahme dargestellt. Zwischen zwei Spannfingern, die an unterschiedlichen Basen gehalten sind, befindet sich ein verhältnismäßig großer Zwischenraum 20. Die Innenseite 21 jedes Spannfingers weist in Achsrichtung gesehen drei verschiedene Abschnitte auf, wobei ein mittlerer Abschnitt 22 als Streifen mit zylindrischer Mantelfläche und die axial äußeren Abschnitte 23 sphärisch bzw. teilkugelförmig ausgebildet sind.

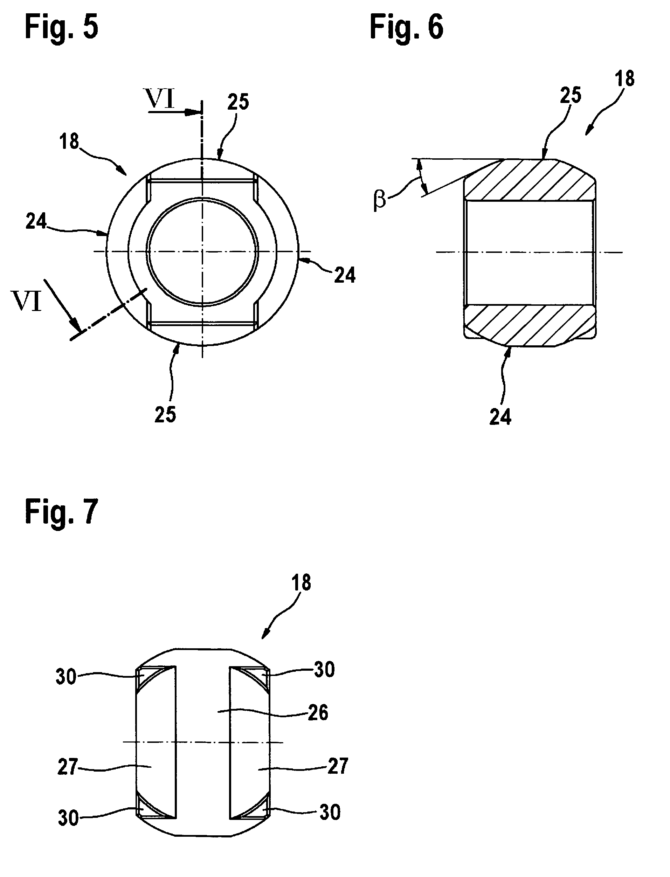

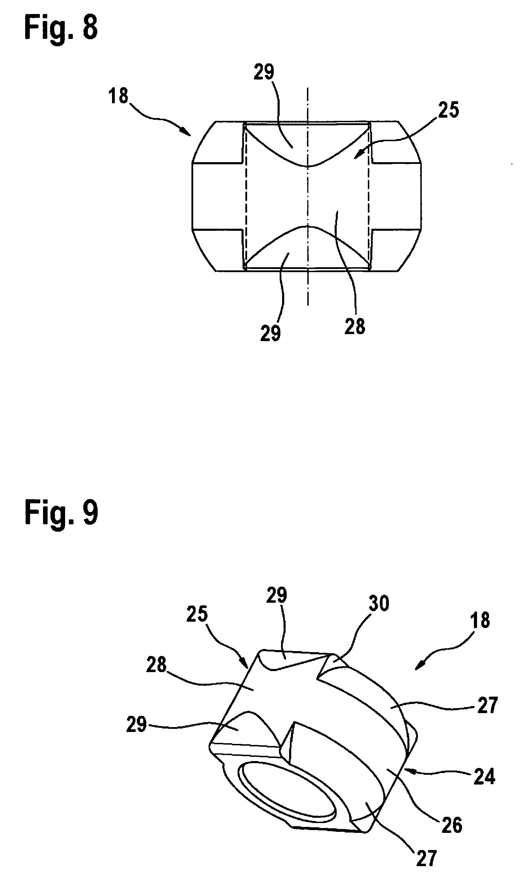

In den Figuren 4 bis 9 ist eine kalottenförmige Lagerbuchse 18 dargestellt. Die Lagerbuchse 18 weist zwei diametral gegenüberliegende Kontaktsektoren 24 auf, wobei an je einem Kontaktsektor 24 in der Einbaulage zwei Spannfinger 16 mit ihrer Innenseite 21 auf Kontakt anliegen. Des Weiteren besitzt die Lagerbuchse 18 zwei gegenüber den Kontaktsektoren 24 um 90° verdrehte, zueinander diametral gegenüberliegende Verdrehsicherungsvorsprünge 25, die in die Zwischenräume 20 zwischen benachbarten Spannfingern 16 radial einragen. Zu diesem Zweck erstrecken sich die Verdrehsicherungsvorsprünge 25 radial nach außen und stehen gegenüber der Mantelfläche an den Kontaktsektoren 24 radial über. In der montierten Position (Fig. 1 und 2) verhindern die Verdrehsicherungsvorsprünge 25 in den Zwischenräumen 20 eine Verdrehung der Lagerbuchse 18 um ihre Längsachse, die zugleich mit der Rotorachse zusammenfällt. Damit ist eine in Umfangsrichtung formschlüssige Verdrehsicherung der Lagerbuchse in der Lageraufnahme gegeben.

Jeder Kontaktsektor 24 an der Lagerbuchse 18 weist in Achsrichtung drei Abschnitte auf, wobei der mittlere Abschnitt 26 als Kontaktstreifen ausgebildet ist und die beiden sich axial daran anschließenden Kontaktabschnitte 27 sphärisch bzw. teilkugelförmig ausgebildet sind. Die Kontaktbereiche 26 und 27 am Kontaktsektor 24 und die Abschnitte 22 und 23 auf der Innenseite 21 der Spannfinger 16 sind komplementär zueinander ausgebildet, wodurch sich eine flächige Anlage zwischen den Kontaktsektoren und den Spannfingern ergibt.

Jeder Verdrehsicherungsvorsprung 25 an der Lagerbuchse 18 weist eine abgerundete Außenfläche 28 auf, an die sich in Achsrichtung jeweils eine Toleranzabflachung 29 anschließt, welche gegenüber der stirnseitigen Ebene an der Lagerbuchse 18 einen Winkel β einschließt. Dieser Winkel β liegt in einem Winkelbereich zwischen 0° und 90°, er beträgt beispielsweise 30°.

Zwischen jedem Kontaktsektor und dem jeweils benachbarten Verdrehsicherungsvorsprung befindet sich an jeder axialen Stirnseite jeweils ein Übergangsausgleichsabschnitt 30, der gegenüber der Längsachse der Lagerbuchse um einen Winkel α geneigt ist, welcher zwischen 0° und 90° liegt und insbesondere kleiner als 30° beträgt. Die Winkel α und β erleichtern ein Kippen der Lagerbuchse 18 gegenüber der Längsachse in zwei zueinander senkrechten Ebenen.

## Patentansprüche

1. Elektrischer Antriebsmotor, insbesondere für ein Aggregat in einem Kraftfahrzeug, vorzugsweise Fensterheber-Antriebsmotor, mit einer in einem Kalottenlager drehbar gelagerten Rotorwelle (7), wobei das Kalottenlager eine Lagerbuchse (18) und eine Lageraufnahme (17) umfasst, die die Lagerbuchse (18) zumindest teilweise umschließt und in Umfangsrichtung formschlüssig sichert, wobei die Lageraufnahme (17) axiale Spannfinger (16) aufweist, zwischen denen die Lagerbuchse (18) aufgenommen ist, und dass am Außenmantel der Lagerbuchse (18) den Spannfingern (16) zugeordnete Kontaktsektoren (24) vorgesehen sind, die an der Innenseite (21) der Spannfinger (16) anliegen, **dadurch gekennzeichnet, dass** die Lageraufnahme (17) mindestens drei axiale Spannfinger (16) aufweist, wobei an der Lagerbuchse (18) zwischen den Kontaktsektoren (24) mindestens ein radial nach außen überstehender Verdrehsicherungsvorsprung (25) angeordnet ist, der in den Zwischenraum (20) zwischen zwei benachbarten Spannfingern (16) radial einragt, wobei sich axial an die Kontaktfläche der Kontaktsektoren (24) sphärisch ausgebildete Kontaktabschnitte (27) anschließen.

2. Antriebsmotor nach Anspruch 1,
**dadurch gekennzeichnet, dass** die Kontaktsektoren (24) eine gleichmäßige Mantelfläche aufweisen und insbesondere einen runden Querschnitt besitzen.

3. Antriebsmotor nach Anspruch 1 oder 2,
**dadurch gekennzeichnet, dass** die Innenseite (21) der Spannfinger (16) komplementär zu den Kontaktsektoren (24) ausgebildet ist.

4. Antriebsmotor nach einem der Ansprüche 1 bis 3,
**dadurch gekennzeichnet, dass** die Kontaktsektoren (24) einen sich in Umfangsrichtung erstreckenden Kontaktstreifen (26) mit zylindrischer Einhüllender aufweisen.

5. Antriebsmotor nach einem der Ansprüche 1 bis 4,
**dadurch gekennzeichnet, dass** ein flächiger Kontakt zwischen dem Außenmantel der Kontaktsektoren (24) und der Innenfläche an den Spannfingern (16) hergestellt ist, so dass in Radialrichtung eine gleichmäßige Flächenpressung im Kalottenlager erreicht und lokale Kraftspitzen vermieden werden.

6. Antriebsmotor nach einem der Ansprüche 1 bis 5,
**dadurch gekennzeichnet, dass** der Verdrehsicherungsvorsprung (25) an der Lagerbuchse (18) eine abgerundete Außenfläche (28) aufweist.

7. Antriebsmotor nach Anspruch 6,
**dadurch gekennzeichnet, dass** sich axial an die abgerundete Außenfläche (28) des Verdrehsicherungsvorsprungs (25) eine Toleranzabflachung (29) anschließt, die gegenüber der Ebene an der Stirnseite der Lagerbuchse (18) um einen Winkel (□) größer 0° und kleiner 90° geneigt ist, insbesondere um 30°.

8. Antriebsmotor nach einem der Ansprüche 1 bis 7,
**dadurch gekennzeichnet, dass** zwischen einem Kontaktsektor (24) und einem Verdrehsicherungsvorsprung (25) an der Lagerbuchse (18) ein Übergangsausgleichsabschnitt (30) angeordnet ist, der gegenüber der Längsachse der Lagerbuchse (18) um einen Winkel (□) größer 0° und kleiner 90° geneigt ist, insbesondere um höchstens 30°.

9. Antriebsmotor nach einem der Ansprüche 1 bis 8,
**dadurch gekennzeichnet, dass** die Lageraufnahme (17) an einem gehäuseseitigen Bürstenhalter (15) ausgebildet ist, der Träger von Kommutatorbürsten ist, welche auf einem drehfest mit der Rotorwelle (7) umlaufenden Kommutator (13) aufliegen.

10. Antriebsmotor nach einem der Ansprüche 1 bis 9,
**dadurch gekennzeichnet, dass** insgesamt vier axiale Spannfinger (16) an der Lageraufnahme (17) vorgesehen sind.

11. Antriebsmotor nach Anspruch 10,
**dadurch gekennzeichnet, dass** insgesamt zwei Kontaktsektoren (24) an der Lagerbuchse (18) angeordnet sind und jeweils zwei Spannfingern (16) ein gemeinsamer Kontaktsektor (24) zugeordnet ist.

## Claims

1. Electric drive motor, in particular for an assembly in a motor vehicle, preferably a window winder drive motor, having a rotor shaft (7) which is rotatably mounted in a spherical bearing, with the spherical bearing comprising a bearing bush (18) and a bearing receptacle (17) which at least partially surrounds the bearing bush (18) and secures it in an interlocking manner in the circumferential direction, with the bearing receptacle (17) having axial clamping fingers (16) between which the bearing bush (18) is held, and with contact sectors (24), which are associated with the clamping fingers (16), being provided on the outer casing of the bearing bush (18), the said contact sectors resting against the inner face (21) of the clamping fingers (16), **characterized in that** the bearing receptacle (17) has at least three axial clamping fingers (16), with at least one rotation-prevention projection (25), which projects radially outwards, being arranged on the bearing bush (18) between the contact sectors (24) and projecting radially into the intermediate space (20) between two adjacent clamping fingers (16), with contact sections (27) which are of spherical design axially adjoining the contact area of the contact sectors (24).

2. Drive motor according to Claim 1, **characterized in that** the contact sectors (24) have a uniform casing surface and, in particular, have a round cross section.

3. Drive motor according to Claim 1 or 2, **characterized in that** the inner face (21) of the clamping fingers (16) is designed to complement the contact sectors (24).

4. Drive motor according to one of Claims 1 to 3, **characterized in that** the contact sectors (24) have a contact strip (26) which extends in the circumferential direction and has a cylindrical envelope.

5. Drive motor according to one of Claims 1 to 4, **characterized in that** flat contact is established between the outer casing of the contact sectors (24) and the inner surface on the clamping fingers (16), and therefore a uniform surface pressure is achieved in the spherical bearing in the radial direction, and local force peaks are avoided.

6. Drive motor according to one of Claims 1 to 5, **characterized in that** the rotation-prevention projection (25) on the bearing bush (18) has a rounded outer surface (28).

7. Drive motor according to Claim 6, **characterized in that** a flattened tolerance portion (29) axially adjoins the rounded outer surface (28) of the rotation-prevention projection (25), the said flattened tolerance portion being inclined through an angle (β) of greater than 0° and less than 90°, in particular through 30°, in relation to the plane at the end face of the bearing bush (18).

8. Drive motor according to one of Claims 1 to 7, **characterized in that** a transition compensation section (30) is arranged between a contact sector (24) and a rotation-prevention projection (25) on the bearing bush (18), the said transition compensation section being inclined through an angle (α) of greater than 0° and less than 90°, in particular through a maximum of 30°, in relation to the longitudinal axis of the bearing bush (18).

9. Drive motor according to one of Claims 1 to 8, **characterized in that** the bearing receptacle (17) is formed on a housing-side brush holder (15) which carries commutator brushes which bear on a commutator (13) which rotates in a rotationally fixed manner with the rotor shaft (7).

10. Drive motor according to one of Claims 1 to 9, **characterized in that** a total of four axial clamping fingers (16) are provided on the bearing receptacle (17).

11. Drive motor according to Claim 10, **characterized in that** a total of two contact sectors (24) are arranged on the bearing bush (18) and in each case two clamping fingers (16) have a common associated contact sector (24).

## Revendications

1. Moteur électrique d'entraînement, en particulier pour un mécanisme disposé dans un véhicule automobile, de préférence moteur d'entraînement de lève-vitre, présentant un arbre de rotor (7) monté à rotation dans un palier en calotte,
le palier en calotte comportant une douille de palier (18) et un logement de palier (17) qui entoure au moins une partie de la douille de palier (18) et la bloque en correspondance géométrique dans la direction périphérique,
le logement de palier (17) présentant des doigts de serrage (16) entre lesquels la douille de palier (18) est reprise,
des secteurs de contact (24) associés aux doigts de serrage (16) étant prévus sur l'enveloppe extérieure de la douille de palier (18) et reposant contre le côté intérieur (21) des doigts de serrage (16),
**caractérisé en ce que**
le logement de palier (17) présente au moins trois doigts axiaux de serrage (16),
**en ce qu'**au moins une saillie (25) de blocage de rotation, débordant radialement vers l'extérieur, est disposée sur la douille de palier (18) entre les secteurs de contact (24) et pénètre radialement dans l'espace intermédiaire (20) situé entre deux doigts de serrage (16) voisins et
**en ce que** des parties de contact (27) de forme sphérique se raccordent axialement à la surface de contact des secteurs de contact (24).

2. Moteur d'entraînement selon la revendication 1, **caractérisé en ce que** les secteurs de contact (24) présentent une surface d'enveloppe uniforme et en particulier ont une section transversale circulaire.

3. Moteur d'entraînement selon la revendication 1 ou 2, **caractérisé en ce que** le côté intérieur (21) des doigts de contact (16) est complémentaire des secteurs de contact (24).

4. Moteur d'entraînement selon l'une des revendications 1 à 3, **caractérisé en ce que** les secteurs de contact (24) présentent un ruban de contact (26) qui s'étend dans la direction périphérique et dont l'enveloppante est cylindrique.

5. Moteur d'entraînement selon l'une des revendications 1 à 4, **caractérisé en ce qu'**un contact de surface entre l'enveloppe extérieure des secteurs de contact (24) et la surface intérieure est établi sur les doigts de serrage (16) de manière à obtenir dans la direction radiale une poussée uniforme sur la surface du palier en calotte et éviter des pointes locales de force.

6. Moteur d'entraînement selon l'une des revendications 1 à 5, **caractérisé en ce que** la surface extérieure (28) de la saillie (25) de blocage de rotation prévue sur la douille de palier (18) est arrondie.

7. Moteur d'entraînement selon la revendication 6, **caractérisé en ce qu'**un aplatissement de tolérance (29) suit axialement la surface extérieure arrondie (28) de la saillie (25) de blocage en rotation et qui est inclinée par rapport au plan du côté frontal de la douille de palier (18) d'un angle (β) supérieur à 0° et inférieur à 90° et en particulier de 30°.

8. Moteur d'entraînement selon l'une des revendications 1 à 7, **caractérisé en ce qu'**une partie (30) de compensation de transition qui est inclinée par rapport à l'axe longitudinal de la douille de palier (18) d'un angle (α) supérieur à 0° et inférieur à 90° et en particulier d'au plus 30° est disposée sur la douille de palier (18) entre le secteur de contact (24) et une saillie (25) de blocage de rotation.

9. Moteur d'entraînement selon l'une des revendications 1 à 8, **caractérisé en ce que** le logement de palier (17) est formé sur un porte-balais (15) situé sur le boîtier et qui porte des balais de commutateur qui s'appuient sur un commutateur (13) périphérique tournant solidairement avec l'arbre de rotor (7).

10. Moteur d'entraînement selon l'une des revendications 1 à 9, **caractérisé en ce qu'**il présente en tout quatre doigts axiaux de serrage (16) sur le logement de palier (17).

11. Moteur d'entraînement selon la revendication 10, **caractérisé en ce qu'**en tout deux secteurs de contact (24) sont disposés sur la douille de palier (18) et **en ce qu'**un secteur de contact (24) commun est associé à chaque fois à deux doigts de serrage (16).
